# EUROPEAN PATENT APPLICATION

(11) **EP 4 752 476 A1**
(43) Date of publication of application: **03.06.2026**
(21) Application number: 24849557.4
(22) Date of filing: 30.07.2024
(51) Int. Cl.: F25D 23/06, F16L 59/065

(54) **ADIABATIC BODY**

(30) Priority: 31.07.2023 KR 20230100015
(71) Applicant: LG Electronics Inc., Yeongdeungpo-gu Seoul 07336 (KR)
(72) Inventor: JUNG, Wonyeong, Seoul 08592 (KR); YOUN, Deokhyun, Seoul 08592 (KR); KIM, Bongjin, Seoul 08592 (KR)
(74) Representative: Ter Meer Steinmeister & Partner
(86) International application number: PCT/KR2024/011107
(87) International publication number: WO 2025/028990

(57) **Abstract**

The present disclosure provides an insulator including a first plate, a second plate, a vacuum space provided between the first plate and the second plate, and a third plate disposed in the vacuum space and connected to at least a portion of the first and second plates.

## Description

### [Technical Field]

The present disclosure relates to an insulator.

### [Background Art]

First, there is the applicant's registered patent No. 10-0343719 (Patent Document 1). According to the registered patent, a vacuum adiabatic panel is manufactured, the vacuum adiabatic panel is built in the wall of a refrigerator, and the exterior of the vacuum adiabatic panel is finished with a separate molded material made of Styrofoam. This method eliminates the need for foaming and improves insulation performance. However, this method has the drawback of increasing costs and complicating the manufacturing process.

As another example, there has been an attempt to manufacture the entire wall of a refrigerator as a single-piece vacuum insulator. For example, U.S. Patent Publication No. US2040226956A1 (Patent Document 2) discloses a method for providing an insulation structure for a refrigerator in a vacuum state. However, it is difficult to provide a sufficient vacuum in the walls of a refrigerator to achieve a practical level of insulation. Specifically, there are problems in that it is difficult to prevent heat transfer at the contact portion between the outer case and the inner case, which have different temperatures, it is difficult to maintain a stable vacuum state, and it is difficult to prevent deformation of the case due to negative pressure in the vacuum state.

Japanese Patent Application Laid-Open No. 2011-247534 (Patent Document 3) discloses an insulation enclosure that simplifies the bonding work and improves productivity when installing and preparing multiple vacuum insulation panels.

Patent Document 3 discloses an insulation enclosure of a refrigerator including an inner case and an outer case and multiple vacuum insulation panels provided between them, and forming a plurality of wall portions of a refrigerator main body, in which the inner case is formed by combining a plurality of inner case partitions into which the entire inner case is divided, and at the same time, the plurality of vacuum insulation panels are formed in a shape corresponding to each inner case partition, and each of the vacuum insulation panels and each of the inner case partitions are installed.

Conventional adiabatic bodies have a problem in that deformation occurs due to vacuum pressure and deformation occurs due to internal shelves and loads of a refrigerator.

Conventional adiabatic bodies have problems in structural strength and insulation performance at corner portions or at portions where a plurality of adiabatic bodies are connected.

[Prior Art Documents] [Patent Document] Korean Patent No. 10-0343719, U.S. Patent Publication No. US2040226956A1, Japanese Patent Application Laid-Open No. 2011-247534A

### [Disclosure]

### [Technical Problem]

The present disclosure provides a technology for an insulator.

Optionally or in another embodiment, the present disclosure provides a technology or improving the strength of an insulator or improving the strength at a portion where a plurality of adiabatic bodies are connected.

Optionally or in another embodiment, the present disclosure provides a technology for improving the insulating performance of an insulator or improving the insulating performance at a portion where a plurality of adiabatic bodies are connected.

Optionally or in another embodiment, the present disclosure provides a technology for reducing vacuum leakage of an insulator or reducing vacuum leakage at a portion where a plurality of adiabatic bodies are connected.

Other objects of the present disclosure may also be described in [specific details for carrying out the disclosure].

### [Technical Solution]

An insulator of the present disclosure may include a first plate and a second plate. The insulator may include a vacuum space provided between the first plate and the second plate. The insulator of the present disclosure may include a third plate disposed in the vacuum space and/or connected to at least a portion of the first and second plates.

The insulator of the present disclosure may include a support plate that supports at least one of the first and second plates in the vacuum space. The third plate may be disposed between the support plate and at least one of the first and second plates.

The third plate may be formed in a plate shape, a grid shape, or a shape including a plate-shaped portion and a grid-shaped portion.

The third plate comprises a grid portion, and the grid portion may include a first grid extending in one direction and a second grid extending in a direction intersecting the one direction.

A block may be provided on one side of the insulator.

The plate-shaped portion may not overlap the block.

The grid portion may be provided on at least one side of the above plate-shaped portion.

The insulator of the present disclosure may include a plurality of bars supporting the first and second plates in the vacuum space. The third plate may extend to cover at least a portion of the outermost bar among the plurality of bars.

The third plate may have a grid-like shape or may have a portion with one side cut out.

The second plate may include a portion forming one surface of a vacuum insulation portion and a portion bent on one side of the portion forming the one surface.

The bent portion may be further bent on one side.

The third plate may have a portion connected one surface of the first plate forming the vacuum space.

A reinforcing member having a bendable portion may be provided on one side of the second plate.

The third plate may include a grid portion. A block may be provided on one side of the insulator. The grid portion may have a portion overlapping the block.

The third plate may include a plate portion forming an inner portion provided between corner sides or outer portion, and a grid portion provided on at least one side of the plate portion. The grid portion may include first and second grids extending in directions intersecting each other.

The insulator of the present disclosure may include a plurality of bars installed in the vacuum space and supported between the first and second plates and disposed at a predetermined distance.

The distance between at least one of the first and second grids is greater than the distance between the plurality of bars.

### [Advantageous Effects]

The insulator of the present disclosure can provide a structure that stably supports the insulator. The insulator of the present disclosure can provide a structure that can reinforce the strength of the insulator itself.

The insulator of the present disclosure can provide a structure capable of reinforcing strength between the first insulator and the second insulator.

The insulator of the present disclosure can provide a structure that improves insulation performance between the first insulator and the second insulator.

### [Description of Drawings]

FIG. 1 is a perspective view illustrating an appearance of a refrigerator according to one embodiment of the present disclosure.
FIG. 2 is a conceptual diagram illustrating an insulator provided in the refrigerator of FIG. 1.
FIG. 3 is a conceptual diagram illustrating a third plate provided on a plate of FIG. 2.
FIG. 4 is a conceptual diagram illustrating a thermal insulator provided on the plate of FIG. 3.
FIG. 5a is an exploded perspective view of the insulator of the present disclosure.
FIG. 5b is a perspective view of the insulator of the present disclosure.
FIG. 6 is a cross-sectional view illustrating an example of the insulator of the present disclosure.
FIG. 7 is a cross-sectional view illustrating another example of the insulator of the present disclosure.
FIG. 8 is a conceptual diagram illustrating an example of deformation of the insulator.
FIG. 9 is a conceptual diagram illustrating an example of a third plate, with one side cut out, being coupled to a first plate.
FIG. 10 is a conceptual diagram illustrating an example in which the third plate having a grid-shaped structure on one side is coupled to the first plate.
FIG. 11 is a perspective view illustrating the structures of a peripheral insulating material, the third plate, and a spacer.
FIG. 12 is a cross-sectional view illustrating an insulator including third plates having different thicknesses.
FIG. 13 is a conceptual diagram conceptually illustrating FIG. 12.
FIG. 14 is a graph illustrating the effect of improving conductive heat transfer by reducing the third plate on one side or designing the third plate in a grid-shaped structure.
FIG. 15 is a conceptual diagram illustrating an area that expands a pitch in which bars are disposed in a supporter.
FIG. 16 is a conceptual diagram illustrating an example of the expanded pitch at which the bars are disposed in the supporter.
FIG. 17 is a graph illustrating a power-saving effect obtained by expanding the pitch at which the bars are disposed in the supporter.
FIG. 18 is a cross-sectional view illustrating a coupling relationship between the second plates on one side of the insulating bodies intersecting each other.

### [Mode for Invention]

Hereinafter, a common description describing the parts commonly defined in all embodiments of the present disclosure will be described.

Optionally, an insulator of the present disclosure may be provided as a single insulator. For example, the insulator may provide a first wall extending in one direction and a second wall extending in a direction different from the one direction. Optionally, the insulator of the present disclosure may include a first insulator and a second insulator. The second insulator may be provided as a separate component separated from the first insulator. The second insulator may be connected to the first insulator by a connector. In the present disclosure, the connector may be defined as a joint. The second insulator may include a portion extending in the same direction as the first insulator. The second insulator may include a portion extending in a different direction from the first insulator. The second insulator may include a portion connected to the first insulator, or may include a portion disposed to overlap the first insulator in at least one direction. The insulator may be a vacuum insulator including a vacuum space or a non-vacuum insulator not including a vacuum space. The insulator may be a combination of the vacuum insulator and the non-vacuum insulator. The vacuum space provided in the second insulator may include a portion extending in the same direction as the vacuum space provided in the first insulator. The vacuum space provided in the second insulator may include a portion extending in a different direction from the vacuum space provided in the first insulator. The vacuum space provided in the second insulator may include a portion disposed to overlap the vacuum space provided in the first insulator in at least one direction. The insulator may be provided in the form of a panel. In the present disclosure, a "panel" is described below as an example, but a disclosure in which the "panel" is replaced with the "insulator" may also be included in the present disclosure. For example, in the present disclosure, when it is described below that at least two panels of the main body form the appearance of the refrigerator, it may be understood or interpreted that at least two adiabatic bodies of the main body form the appearance of the refrigerator.

Optionally, the refrigerator of the present disclosure may include a main body. The main body may include at least one storage chamber. The main body may include a partition wall dividing a first storage chamber and a second storage chamber. The first storage chamber joint may include a first sub chamber joint, a second sub chamber joint, and/or a third sub chamber joint. The second storage chamber joint may be provided on one side of the second storage chamber. The second storage chamber joint may include a first joint, a second joint, and/or a third joint.

The partition wall may include the vacuum insulator and/or the non-vacuum insulator. The refrigerator of the present disclosure may include a door. The refrigerator of the present disclosure may include a machine room disposed on one side of the main body. At least one of a compressor, a heat-radiating component (for example, a condenser, a heat-radiating portion of a thermoelectric module, a heat sink for heat exchange with the heat-radiating portion of a thermoelectric module, or the like), and a cooling fan may be disposed in the machine room. The refrigerator may include at least one of a first cover (for example, a side cover) forming at least a portion of a first surface (for example, a side surface), a second cover (for example, a back cover) forming at least a portion of a second surface (for example, a rear surface), a third cover (for example, an upper cover) forming at least a portion of a third surface (for example, an upper surface), a fourth cover (for example, a bottom cover) forming at least a portion of a fourth surface (for example, a bottom surface), and a fifth cover (for example, a front cover) forming at least a portion of a fifth surface (for example, a front surface) for the machine room. One or more of the first, second, third, fourth, and fifth covers may be provided as a single component or in a plurality of components. The machine room may include the insulator in the refrigerator of the present disclosure.

The panel may include at least one of a first plate, a second plate, and a side plate. A vacuum space may be provided between the first plate and the second plate. The refrigerator of the present disclosure may include at least one panel. The present disclosure may include at least one of a first panel forming at least a portion of a first surface (for example, a side surface) of the refrigerator, a second panel forming at least a portion of a second surface (for example, a rear surface) of the refrigerator, a third panel forming at least a portion of a third surface (for example, an upper surface) of the refrigerator, a fourth panel forming at least a portion of a fourth surface (for example, a bottom surface) of the refrigerator, and a fifth panel forming at least a portion of a fifth side (for example, a front surface) of the refrigerator. At least one of the first, second, third, fourth, and fifth surfaces of the refrigerator may provide at least a portion of a wall forming the main body or may provide at least a portion of a wall forming the door. At least one of the first, second, third, fourth, and fifth panels may be provided as a single component or may be provided in a plurality of components. The joint may be provided to connect the corner of the refrigerator or to connect a first wall and a second wall forming a wall of the refrigerator to each other. The joint may be provided to connect the panel to another component (for example, another panel). The joint may be provided to connect at least two of the first, second, third, fourth, and fifth panels. At least one of the first, second, third, fourth, and fifth panels may be provided as a plurality of panels, and the joint may be provided to connect the plurality of panels to each other. The joint may include a first surface, a second surface, and/or a third surface. The first surface of the joint may cover at least a portion of at least one of the first, second, third, fourth, and fifth panels. The second surface of the joint may cover at least a portion of at least another one of the first, second, third, fourth, and fifth panels. The third surface of the joint may be connected to the first surface of the joint and/or the second surface of the joint. The third surface of the joint may be connected to a corner of the first surface of the joint and/or a corner of the second surface of the joint. The third surface of the joint may be formed to be inclined to at least one of the first surface of the joint and the second surface of the joint. At least some of the first, second, third, fourth, and fifth panels may be provided as panels having a first insulation performance per unit thickness, and at least other some of the first, second, third, fourth, and fifth panels may be provided as panels having a second insulation performance per unit thickness. The first insulation performance and the second insulation performance may be different.

The insulator or refrigerator of the present disclosure may include a duct. The duct may include a first duct, a second duct, and/or a third duct. The first duct may supply cold air to the first storage chamber or the second storage chamber. The second duct may accommodate an evaporator. The third duct may be connected to the first duct and the second duct in communication with each other.

The third duct may include a first surface, a second surface, a third surface, a fourth surface, and/or a fifth surface. The first surface of the third duct may surround the first surface of the joint. The second surface of the third duct may surround the second surface of the joint. The third surface of the third duct may surround the third surface of the joint. The third duct may include a fourth surface. The fourth surface of the third duct may extend from the first surface of the third duct or may be disposed toward the second storage chamber. The fifth surface of the third duct may extend from the second surface of the third duct or may be disposed toward the evaporator.

The insulator or refrigerator of the present disclosure may include a block. The block may include a portion extending in the same direction as one or more of the first, second, third, fourth, and fifth panels. The block may include a portion extending in a different direction from one or more of the first, second, third, fourth, and fifth panels. The block may include a first surface (for example, a left surface), a second surface (for example, a right side), a third surface (for example, a rear side), a fourth surface (for example, a lower surface), a fifth side (for example, an upper surface), and a sixth side (for example, a front surface). Some of the first, second, third, fourth, and fifth sides of the refrigerator may be provided in the form of panels, and other parts of the first, second, third, fourth, and fifth sides of the refrigerator may be provided in the form of blocks. The block may be provided as the non-vacuum insulator. For example, the block may be a block cover and/or a PU foam filling inside the block cover. The block may include at least one of a first block portion (for example, a side block portion), a second block portion (for example, a rear block portion or a front block portion), and a third block portion (for example, a bottom block portion or a upper block portion). Each of the first, second, and third block portions may be provided in a plurality of block portions. At least two of the first, second, and third block portions may be connected to provide the joint. The third block portion may form one surface of the first storage chamber and/or one surface of the machine room. The third block portion may be provided as a partition wall, or may form one surface of the first storage chamber.

The insulator or refrigerator of the present disclosure may include an insulating reinforcement portion. The insulating reinforcement portion may include a portion connected to one side of the block, or a portion formed to protrude from the block.

The insulator or refrigerator of the present disclosure may include a hinge. The hinge may be disposed on one side of the insulator. The hinge may be disposed on the main body and/or door of the refrigerator.

The hinge may include at least one of a hinge fixing portion which is a portion that the hinge is coupled to at least one of the insulator, the main body of the refrigerator, and the door of the refrigerator, a hinge shaft, and a hinge connecting portion which is a portion extending to protrude from the hinge fixing portion. The hinge may include at least one of a first hinge (for example, an upper hinge) disposed on one side of a wall forming the first storage chamber, a second hinge (for example, a middle hinge) disposed on the partition wall, and a third hinge (for example, a lower hinge) of the wall forming the second storage chamber. The insulator or the refrigerator of the present disclosure may include at least one of a hinge reinforcing frame that reinforces the strength of the hinge, a cover to which the hinge is coupled, and a hinge reinforcing plate that is disposed or accommodated so as to be connected to the panel. The hinge reinforcing frame may include at least one of a first, a second, a third, and a fourth frame portion. At least two of the first, second, third, and fourth frame portions may extend in different directions.

The insulator or refrigerator of the present disclosure may include a support frame. The support frame may support one surface of the panel. The support frame may include a coupling portion. The block may be supported by the support frame in the machine room. The support frame may include a first support frame and/or a second support frame.

The insulator or refrigerator of the present disclosure may include an inner cover. The inner cover may be disposed between the cover of the machine room and the hinge reinforcement frame (for example, the first frame portion).

The insulator or refrigerator of the present disclosure may include a decoration. The decoration may be disposed on the surface of the insulator. The decoration may be disposed on the surface of the main body and/or door of the refrigerator. For example, the decoration may be disposed on the outer surface of the insulator or the outer surface of the refrigerator.

The insulator or refrigerator of the present disclosure may include a hot line. The hot line may be disposed on the surface of the insulator. The decoration may be disposed on the surface of the main body and/or door of the refrigerator. The hot line may be disposed between the decoration and the surface of the insulator. The hot line may be disposed between the decoration and the surface of the refrigerator and/or between the decoration and the surface of the door.

The insulator or refrigerator of the present disclosure may include a casing. The casing may be an outer casing or an inner casing. The outer casing may be connected to the second plate. The outer casing may be provided to cover at least a portion of the second plate. The outer casing may be provided in contact with the second plate or spaced apart from the second plate by a predetermined distance. The inner casing may be connected to the first plate. The inner casing may be provided to cover at least a portion of the first plate. The inner casing may be provided in contact with the first plate or spaced apart from the first plate by a predetermined distance.

The insulator or refrigerator of the present disclosure may include a drawer and/or a drawer guide. The drawer guide may include a first storage chamber drawer guide provided in a first storage chamber. The first storage chamber drawer guide may include at least one of a first plate (for example, a side plate), a second plate (for example, a bottom plate), a third plate (for example, a top plate), and a fourth plate (for example, a middle plate).

The drawer guide may be provided with a second storage chamber drawer guide provided in the second storage chamber.

The insulator or refrigerator of the present disclosure may include a shelf and/or a shelf support frame.

[Details Description of the Disclosure] is divided into the aforementioned [common description] and the [description based on drawings] described below. In the [Details Description of the Disclosure], each of the specific details described for carrying out the disclosure may be understood as an embodiment of the present disclosure. In the [Details Description of the Disclosure], a content that combines at least two or more of the specific details described for carrying out the disclosure may also be understood as an embodiment of the present disclosure. For example, each paragraph and each combination of paragraphs in the [common description] section or the section described based on the drawings in the [Details Description of the Disclosure] may be understood as an embodiment of the present disclosure. As another example, each sentence and each combination of sentences in the [Common description] section or the section described based on the drawings in the [Details Description of the Disclosure] may be understood as an embodiment of the present disclosure.

Hereinafter, based on each drawing, the [description based on drawing] section describing the present disclosure will be described.

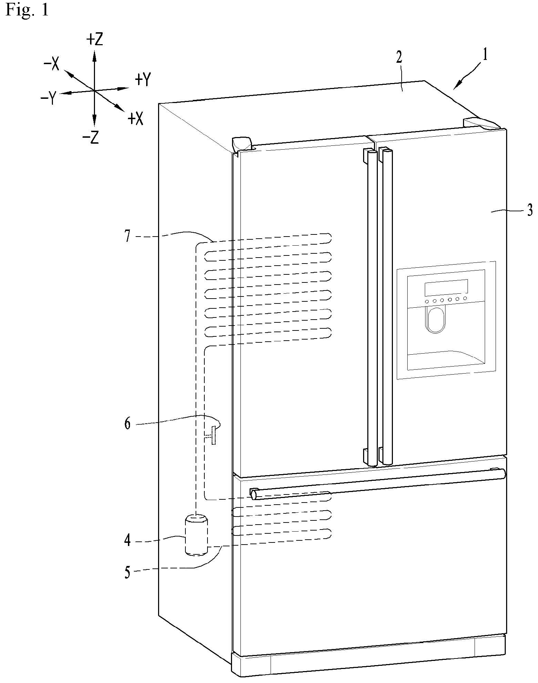

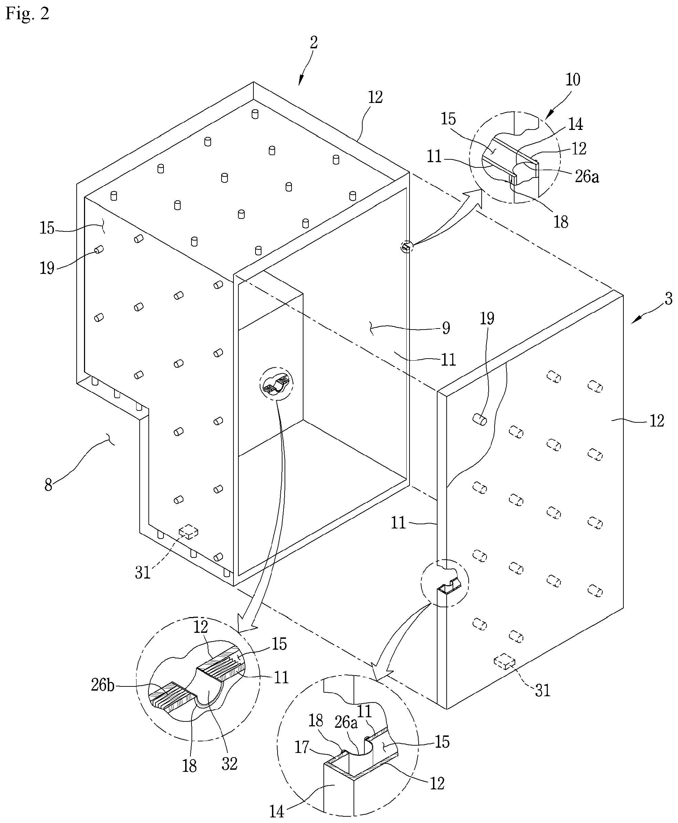

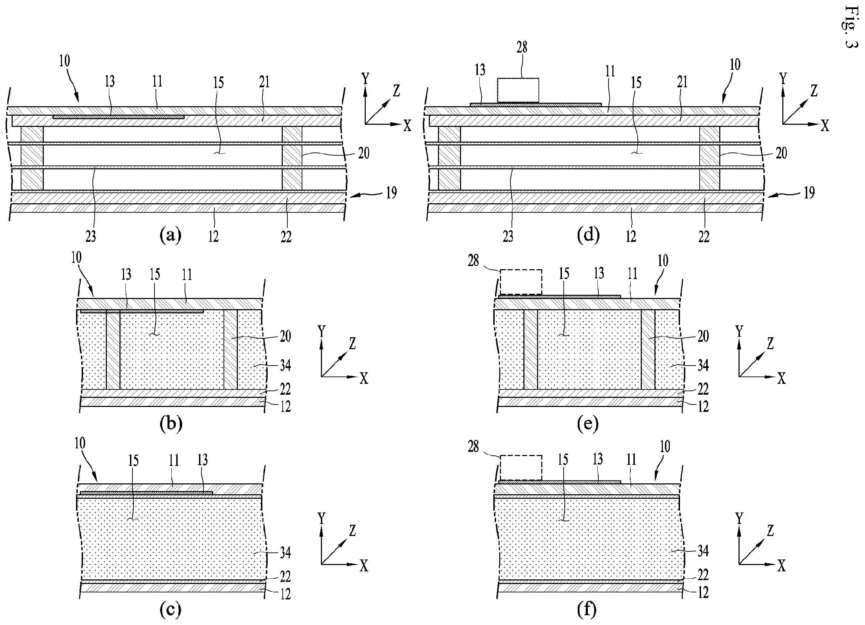

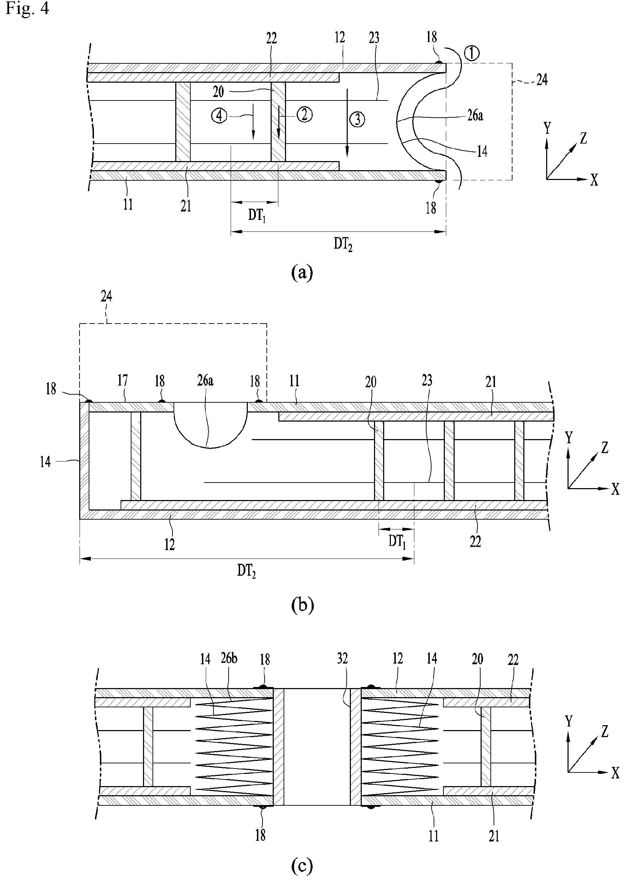

Referring to FIGS. 1 to 4, an insulator 10 of the present disclosure may include plates 11, 12, and 14. In the present disclosure, the term "plate" may mean at least one of the first and second plates 11 and 12 and the side plate 14. Optionally, the insulator of the present disclosure may include a vacuum space 15. The vacuum space 15 may be formed by walls provided by the plates 11, 12, and 14. The vacuum space 15 may have a thickness in a first direction. The plates 11, 12, and 14 may include a first plate 11 and a second plate 12. The first plate 11 may include a portion extending in a direction different from the first direction. The second plate 12 may include a portion extending in a first direction different from the second direction. Optionally, the plate may include a side plate 14 including a portion extending in the first direction. For example, the insulator 10 of the present disclosure may be provided such that the first and second plates 11 and 12 and the side plate 14 are each provided as separate components, and the separated components are connected to each other. As another example, the insulator 10 of the present disclosure may be provided such that at least two components among the first and second plates 11 and 12 and the side plate 14 are provided as an integral part, and the separated components are connected to each other. As yet another example, the insulator 10 of the present disclosure may be provided such that the portions connecting the first and second plates 11 and 12 and the side plate 14 to each other are each provided as an integral part. In this case, the first plate 11 may be provided as a separate component, and the separated components may be provided to be connected to each other. Alternatively, the second plates 12 may be provided as separate components, and the separated components may be provided to be connected to each other. Alternatively, the side plates 14 may be provided as separate components, and the separated components may be provided to be connected to each other. Optionally, the insulator 10 of the present disclosure may include a third plate that is disposed on at least a portion of the insulator 10 or connected to at least a portion of the plates 11, 12, and 14. The third plate may include a portion that is thinner or has the same thickness as the plates 11, 12, and 14. The third plate may include a portion that is thicker than the plates 11, 12, and 14. The third plate may be disposed in the vacuum space 15 or may be disposed outside the vacuum space 15. Examples of the third plate may include the thermal insulators 23, 26a, 26b, and 34 and the deformation resistor 13 described in the present disclosure.

Optionally, the insulator 10 of the present disclosure may include thermal insulators 23, 26a, 26b, and 34 for reducing the amount of heat transfer between a first space provided near the first plate 11 and a second space provided near the second plate 12, or for reducing the amount of heat transfer between the first plate 11 and the second plate 12. A thermal insulator that reduces the amount of heat transfer by conduction may be defined as a conduction resistance sheets 26a and 26b, and a thermal insulator that reduces the amount of heat transfer by radiation may be defined as a radiation resistance sheet 23. The thermal insulators 23, 26a, 26b, and 34 may be provided as a porous material 34 or as a filler 34. The filler whose interior is filled with a porous material can be defined as the porous material 34. The thermal insulators 23, 26a, 26b, and 34 may include at least one of the radiation resistance sheet 23, the porous material 34, the filler 34, and the conduction resistance sheets 26a and 26b, or a mixture of at least two of them. The thermal insulators 23, 26a, 26b, and 34 may be connected to at least a portion of the plates 11, 12, and 14 or may be provided so as not to come into contact with the plates 11, 12, and 14. A shield 24 may be provided on the outside of the thermal insulators 23, 26a, 26b, and 34 to provide insulation. A connecting frame 17 may be provided on the outside of the thermal insulators 23, 26a, 26b, and 34. The insulator 10 may include a conduit passing through the vacuum space 15. The conduit may be formed by providing a pipe wall 32 as a separate component, or may be provided in a form in which the pipe wall 32 is deleted and only a through hole is formed in the plate. The side plate 14 may be provided near the conduit, or the thermal insulators 23, 26a, 26b, and 34 may be provided.

Optionally, the insulator 10 of the present disclosure may include a deformation resistor 13 connected to at least some of the plates 11, 12, and 14 to increase the degree to deformation resistance of the plates 11, 12, and 14. When the deformation resistor is provided in the form of a plate, the deformation resistor may be referred to as a deformation resistance plate.

Optionally, the insulator 10 of the present disclosure may include a support 19 connected to at least some of the plates 11, 12, and 13 and maintaining the vacuum space 15. The support 19 may include a bar 20 having a portion extending in a first direction, which is a thickness direction of the vacuum space 15. The support 19 may include a support plate 22 having a portion extending in a direction different from the first direction. The support 19 may include a plurality of bars 20 and a connecting plate 21 connecting the plurality of bars 20. The support 19 may include at least one of the bar 20, the connecting plate 21, and the support plate 22, or a mixture of at least two of them.

Optionally, the insulator 10 of the present disclosure may include a component coupling portion that provides a portion where the components 24, 28, and 32 are disposed or supported. For example, when the component coupling portion is provided in the form of a plate, the component coupling portion may be referred to as a component coupling portion plate. The component connected to the component coupling portion may include a through component that is disposed to pass through at least a portion of the insulator 10 or at least some of the plates 11, 12, and 14. The component connected to the component coupling portion may include a surface component that is disposed to be connected to the surface of the insulator 10 or to be connected to the surfaces of the plates 11, 12, and 14. The through component may be a component that forms a path through which a fluid (electricity, refrigerant, water, air, or the like) passes. The through component may be provided in the form of a tube. The tube may include a straight tube and/or a curved tube. The tube may be provided in a plurality of tubes or may extend in one direction. The through component may include at least one of the tube, the first outlet portion, and the second outlet portion. In the present disclosure, the fluid is defined as all types of flowing objects. The fluid includes moving solids, liquids, gases, and electricity. The through component may be a component that forms a path through which a refrigerant for heat exchange passes, such as a Suction Line Heat Exchanger (SLHX) or a refrigerant pipe. The SLHX may be understood as a suction line heat exchanger that causes heat exchange between the refrigerant that has passed through the evaporator and the refrigerant before being introduced into the evaporator. The through component may be a wire that supplies electricity to the apparatus. The through component may be a component that forms a path through which air can pass, such as a duct or port through which a fluid flows along the surface of the through component. The port may include an exhaust port that provides a path through which air is exhausted from a space formed between the first plate 11 and the second plate 12 to form the vacuum space 15. The through component may be paths through which fluids such as coolant, hot water, ice, and defrost water may pass. Examples of the surface component may include a peripheral insulating material, a side panel, an injected foam, a pre-prepared resin, a hinge, a latch, a basket, a drawer, a shelve, lighting, a sensor, an evaporator 7, a front decoration, a hot line, a heater, an exterior cover, and an interior cover.

Through FIGS. 1 to 4, terms such as the plate, the first plate, the second plate, the side plate, the third plate, the vacuum space, the thermal insulator, the conduction resistance sheet, the radiation resistance sheet, the porous material, the filler, the component coupling portion, the joint, the support, the bar, the support plate, the connecting plate, the deformation resistor, the deformation resistance plate, the component coupling portion, the component coupling portion plate, the through component, the surface component, the duct, the port, or the like are defined. In the present disclosure, when the above terms are used in parts other than the parts described with respect to FIGS. 1 to 4, the terms used should be interpreted as defined in FIGS. 1 to 4.

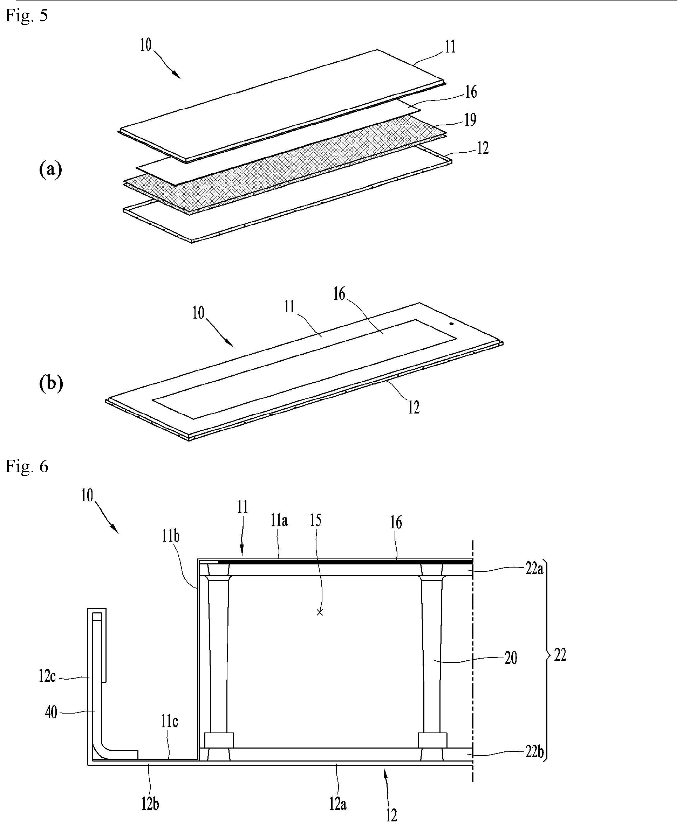

In the present disclosure, that object A is connected to object B may be defined to mean that at least a portion of the object A and at least a portion of the object B are directly connected, or that at least a portion of the object A and at least a portion of the object B are connected via an intermedium between the objects A and B. In a modification example, the object A being connected to the object B may include a case in which the object A and the object B are prepared as a single body in a shape in which they are connected in the above-described manner. In the present disclosure, examples of connection can be support, combine, and seal, which will be described later. In the present disclosure, the phrase "object A is supported by the object B" may be defined to mean that the object A is restricted from moving in one or more of +X, -X, +Y, -Y, +Z, and -Z axis directions by the object B. In the present disclosure, examples of support may be coupling and sealing, which will be described later. In the present disclosure, the phrase "object A is combined with the object B" may be defined to mean that the object A is restricted from moving in one or more of the X, Y, and Z-axis directions by the object B. In the present disclosure, an embodiment of the combination may be a sealing, which will be described later. In the present disclosure, the phrase "object A is sealed with the object B" may be defined to mean that movement of fluid is not permitted at a portion where the object A and object B are connected. In the present disclosure, at least one object, that is, at least a portion of the object A and the object B, may be defined as including a portion of the object A, the entirety of the object A, a portion of the object B, the entirety of the object B, a portion of the object A and a portion of the object B, a portion of the object A and the entirety of the object B, the entirety of the object A and a portion of the object B, and the entirety of the object A and the entirety of the object B. In the present disclosure, the phrase "plate A may be a wall defining space A" may be defined to mean that at least a portion of the plate A may be a wall forming at least a portion of the space A. That is, at least a portion of the plate A may be the wall forming the space A, or the plate A may be the wall forming at least a portion of the space A. In the present disclosure, the central portion of an object may be defined as a portion positioned at the center among three portions obtained by dividing the object into three equal parts along a longitudinal direction of the object. The periphery of an object may be defined as a portion positioned on one side or the other of a central portion among three portions obtained by dividing the object into three equal parts. The periphery of an object may include a surface in contact with the central portion and a surface opposite thereto. The opposite surface may be defined as the border or corner of the object. In the present disclosure, a degree to deformation resistance indicates the degree to which an object resists deformation, and may be defined as a value determined by the shape including the thickness of the object, the material of the object, and the processing method of the object. In the present disclosure, a degree of heat transfer resistance indicates the degree to which an object resists heat transfer, and may be defined as a value determined by the shape including the thickness of the object, the material of the object, and the processing method of the object. In the present disclosure, a degree of heat transfer resistance may be defined as at least one of a degree of conduction resistance, a degree of radiation resistance, and the degree of convection resistance or a sum of at least two or more thereof. The terms "upper side", "lower side", "right side", "left side", "front side", and "rear side" used in the following description will be understood through the coordinate system illustrated in FIGS. 1 and 5. An example of the "+Z" means the "upper side", an example of the "-Z" means the "lower side", an example of the "+Y" means the "right side", an example of the "-Y" means the "left side", an example of the "+X" means the "front side", and an example of the "-X" means the "rear side". A front-rear direction used in the present specification may be an example of the X-axis direction, a left-right direction may be an example of the Y-axis direction, and an up-down direction may be an example of the Z-axis direction.

The insulator 10 of the present disclosure may be applied to a refrigerator 1. The refrigerator 1 may include a main body 2 provided with a cavity 9 capable of storing stored items, and a door 3 provided to open and close the main body 2. A cold source for supplying cold air (cold) to the cavity 9 may be provided. For example, the cold source may be an evaporator 7 that evaporates a refrigerant to remove heat. The refrigerator may include a compressor 4 that compresses the refrigerant. The refrigerator may include a condenser 5 that condenses the compressed refrigerant. The condenser 5 may be connected to an expander 6 that expands the condensed refrigerant.

In the present disclosure, a third plate 16 can reduce the wall forming the insulator 10 from being deformed, recessed, or collapsed toward the inside of the vacuum space 15.

The wall forming the insulation 10 may include the first plate 11 and the second plate 12. The third plate 16 may be disposed on at least one of the first plate 11 and the second plate 12.

The third plate 16 may be disposed in a thinner portion of the first plate 11 and the second plate 12. The third plate 16 may be disposed in a weaker portion of the first plate 11 and the second plate 12.

The third plate 16 may be disposed on at least one side of the inner and outer sides of the vacuum space 15.

The third plate 16 may be disposed on at least one curved portion of the first and second plates 11 and 12. The third plate 16 may be disposed on at least a portion of the periphery of the vacuum space 15 or the first and second plates 11 and 12. The third plate 16 may be disposed spaced apart from the peripheral insulating material covering the vacuum space 15 or the first and second plates 11 and 12. The third plate 16 may be disposed on at least a portion of the peripheral insulating material covering the vacuum space 15 or the first and second plates 11 and 12. The third plate 16 may be disposed to extend to the outermost bar among a plurality of bars disposed inside the first and second plates 11 and 12. The third plate 16 can extend to a portion of at least one of the bent portions 11b and 12c of the first and second plates 11 and 12.

The third plate 16 may have a thickness thinner than one of the first and second plates 11 and 12. The third plate 16 may have portions with different thicknesses. The third plate 16 may have portions with variable thicknesses. The third plate 16 may have long, winding portions in consideration of the heat conduction path.

The third plate 16 may include a portion having a grid-like shape. The third plate 16 may include a portion having one side cut out.

The third plate 16 may have a thin thickness 16b in a portion overlapping with the supporter set grid. The third plate 16 may have a thick thickness 16a in a portion not overlapping the supporter set grid. In a portion where the third plate 16 and the supporter set grid overlap, the density of the supporter set grid may be reduced. The supporter set grid may be a set grid including a plurality of bars 20 and support plates 22a and 22b.

The third plate 16 may be disposed between the supporter set support plate and at least one of the first and second plates 11 and 12.

In FIG. 6, an example is illustrated in which the first and second plates 11 and 12 are supported by two bars.

Referring to FIG. 6, the third plate 16 may be disposed to be inserted into the inner or outer side of the first plate 11. The third plate 16 may be extended to cover at least a portion of the outermost bar. This prevents damage or deformation due to sagging of the first plate 11.

The third plate 16 may not extend to the portion where the first plate 11 and the second plate 12 are coupled or sealed to each other. The third plate 16 may not extend to the side frame or the second portion 11b of the first plate 11. The third plate 16 may have a surface that is at least partially connected to the first portion 11a of the first plate 11.

A reinforcing member 40 may be provided on one side of the second plate 12. The reinforcing member 40 may be disposed on one side of the insulator 10, or may have a portion that is bent to facilitate strength reinforcement. Since the reinforcing member 40 may be disposed on one corner of the second plate 12, the reinforcing member may also be referred to as a corner frame. When at least two adiabatic bodies 10 are coupled to each other, the reinforcing member 40 may be disposed between the second plate 12 of the first insulator 10 and the second plate 12 of the second insulator 10. By the reinforcing member 40, the strength of the second plate 12 itself may be reinforced, and the strength may be reinforced between the first and second adiabatic bodies 10. The reinforcing member 40 may, for example, be disposed on a third portion of the second plate 12. The reinforcing member 40 may be inserted into a portion of the third section where one side is more bent.

The second plate 12 may include a first portion 12a forming one surface of the vacuum insulation portion, and a second portion 12b extending further from the first portion 12a.

The second plate 12 may include a third portion 12c that is bent from the second portion 12b. The third portion 12c may be formed such that one side is further bent. As a result, the second plate 12 may be reinforced in its shape by forming a structure that is bent twice.

At least two adiabatic bodies 10 may be coupled to each other between the second plates 12 having a double-folded structure on one side. As a result, strength reinforcement may be achieved at the portion where at least two adiabatic bodies 10 are coupled.

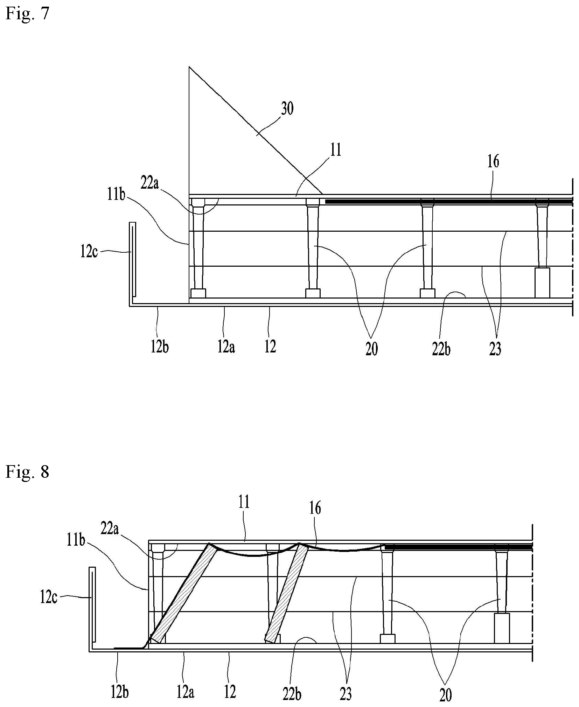

In FIG. 7, an example is illustrated in which the third plate 16 is disposed so as not to cover the outermost bar 20 and the bar 20 adjacent the outmost bar. The third plate 16 may be disposed so as to extend from the outermost side to between the second bar and third bar 20.

A block 30 may be provided on one side of the insulator 10. The block 30 may include a non-vacuum insulation portion. The block 30 may further include a portion that covers or couples the non-vacuum insulation portion.

The third plate 16 may not overlap with the block 30 in the longitudinal direction of the insulator 10, or may be spaced apart from the block 30. This makes it possible to reduce heat transfer from the third plate 16 to the block 30.

The third plate 16 may not extend to the corner of the first plate 11. This allows heat transfer from the third plate 16 to the second plate 12 through the first plate 11.

Optionally, the insulator 10 of the present disclosure may include a support for maintaining a vacuum space 15. The support may include the bar 20 and the support plates 22a and 22b. The bar 20 may extend in the thickness direction of the vacuum space 15. The support plates 22a and 22b may be connected to at least one of the first plate 11 and the second plate 12. The support plates 22a and 22b may connect the plurality of bars 20 to each other.

Optionally, the insulator 10 of the present disclosure may include a radiation resistance sheet 23 that reduces heat transfer by radiation. The radiation resistance sheet 23 may be formed in parallel with the longitudinal direction of one of the first and second plates 11 and 12 in the vacuum space 15. A plurality of radiation resistance sheets 23 may be provided.

In FIG. 8, an example is illustrated in which the third plate 16 extends past the outermost bar 20 to one side of the first plate 11. For example, when the third plate 16 extends to the position where the block 30 is installed and to the corner of the first plate 11, deformation may occur in the outermost bar 20 due to the third plate 16. In particular, when exhausting at a high temperature to form the vacuum space 15, deformation may occur in the corner due to deformation of the first plate 11.

That is, it is preferable that the third plate 16 does not extend to the corner of the first plate 11. In this way, the third plate 16 may be spaced apart from the corner of the first plate 11. This prevents deformation or damage to the outermost bar 20 of the insulator 10, the bar 20 adjacent to the outermost bar, or the area near the corner portion of the insulator 10.

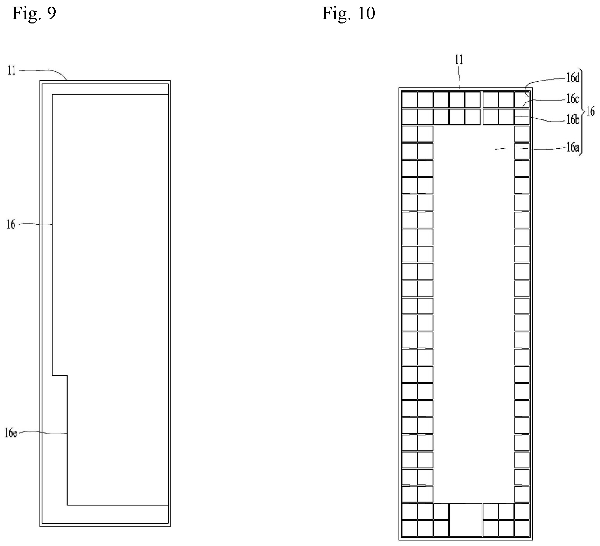

Referring to FIG. 9, the third plate 16 may be formed to have a cut portion 16e in which one side is cut out.

The third plate 16 may be cut from one side of the insulator 10. The third plate 16 may be cut from one side at a portion where the block 30 of the first plate 11 is installed or at a portion where the adiabatic bodies 10 are coupled to each other. The cut portion 16e of the third plate 16 may be spaced apart from the block 30.

Referring to FIG. 10, optionally, the third plate 16 may have grid-shaped ribs 16b, 16c, and 16d.

Optionally, at least two adiabatic bodies 10 may be provided in an intersecting direction. This may facilitate the installation of the block 30 on one side between the adiabatic bodies 10 that are connected to each other.

At least two adiabatic bodies 10 may have difficulty installing the block 30 in the portion between them, that is, the corner portion. The corner where the door and the main body meet may also include the portion to which the decoration is coupled. As such, the portion between the adiabatic bodies 10 may have areas vulnerable to insulation.

Accordingly, when the third plate 16 is provided with grid-shaped ribs 16b, 16c, and 16d, the amount of heat transfer through the third plate 16 may be reduced due to the space between the ribs 16b, 16c, and 16d. As a result, the insulation performance in the portions vulnerable to insulation, such as the corners of the insulator 10, can be improved.

The third plate 16 may be formed in a plate shape, a grid shape, or may be formed to include a plate-shaped portion and a grid portion.

Referring to FIG. 10, the third plate 16 may include a plate portion 16a and a grid portion.

The plate-shaped portion may include the plate portion 16a. The grid portion may include the grid-shaped ribs 16b, 16c, and 16d.

The plate portion 16a may form an inner portion or outer portion provided between the edges of the third plate 16. The plate portion 16a may have a thickness greater than that of the first plate 11. The plate portion 16a may have a thickness less than that of the second plate 12 or may have the same thickness as that of the second plate 12.

The plate portion 16a may have a predetermined thickness and area.

The grid portion may be provided on at least one side of the plate portion 16a. The grid portion may be connected to the corner of the plate portion 16a. The grid portion may include a first grid 16b and a second grid 16c. The first grid 16b may extend in one direction. The second grid 16c may extend in the direction intersecting the first grid 16b. The grid portion may include an corner grid 16d provided as a grid that forms the corner of the third plate 16.

FIG. 10 illustrates an example in which the plate portion 16a is formed on the inner or outer portion provided between the corner sides, and grid portions 16b, 16c, and 16d are provided on four sides of the plate portion 16a.

The grid-shaped ribs are formed to include the first and second grids and the corner grid, so that the amount of heat transfer passing through the third plate 16 can be reduced by the space between the first and second grids and the corner grid. As a result, the insulation performance in areas vulnerable to insulation, such as the corner portions of the insulator 10, can be improved.

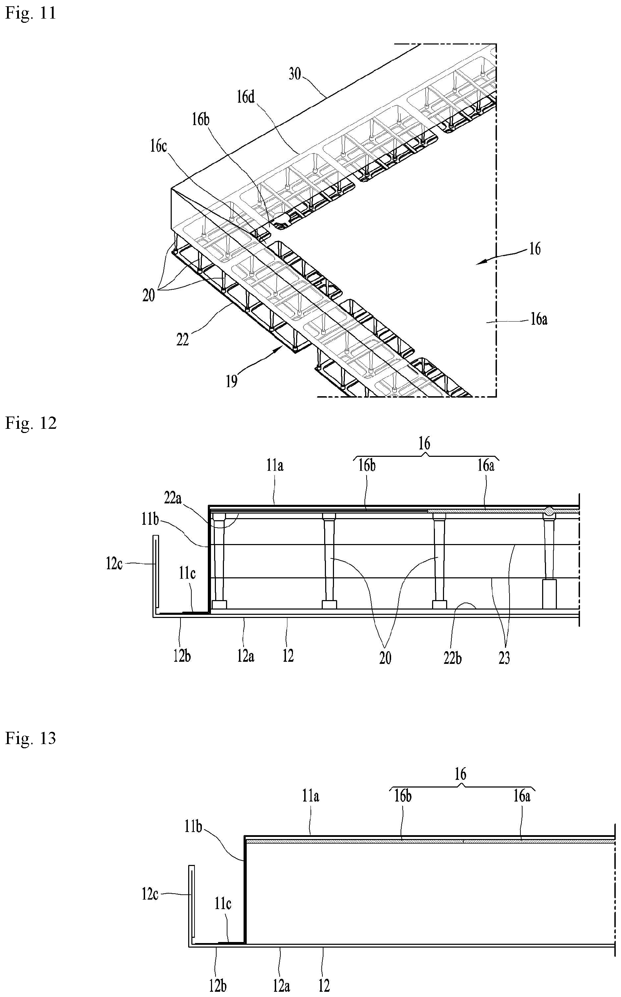

In FIG. 11, the third plate 16 including the grid-shaped ribs 16b, 16c, and 16d and the plate portion 16a is illustrated.

The third plate 16 is disposed on the supporter. The third plate 16 is disposed on the supporter. One side of the third plate 16 where the grid-shaped ribs 16b, 16c, and 16d are provided may be disposed so as to overlap the block 30. The block 30 may have a portion that does not overlap with or is spaced apart from the plate portion 16a of the third plate 16.

By this structure, strength reinforcement can be achieved on one side of the insulator 10 where the block 30 is disposed. The deterioration of insulation performance due to conduction can be reduced by the space between the grid-shaped ribs 16b, 16c, and 16d.

The grid-shaped ribs 16b, 16c, and 16d may be disposed to overlap with the supporter. The grid-shaped ribs 16b, 16c, and 16d may be disposed to overlap with the bar 20. Optionally, the grid-shaped ribs 16b, 16c, and 16d may have a portion that is parallel to the extension directions of the support plates 22a and 22b that supports the bar 20. As a result, strength reinforcement can be achieved in the insulator 10 on which the bar 20 is disposed.

Optionally, the grid-shaped ribs 16b, 16c, and 16d may have a greater distance than the support plates 22a and 22b supporting the bar 20. The distance between the first grids may be a greater distance than the distance between the support plates 22a and 22b supporting the bar 20. The distance between the second grids may be a greater distance than the distance between the support plates 22a and 22b supporting the bars 20. Referring to FIG. 11, the grid-shaped ribs 16b, 16c, and 16d may be formed to have distance that are approximately two or three times greater. As a result, the deterioration of the insulation performance due to conduction caused by the space between the grid-shaped ribs 16b, 16c, and 16d may be reduced.

Optionally, the thickness of the grid-shaped ribs 16b, 16c, and 16d may be provided to be thinner than the thickness of the plate portion 16a, so that the insulation performance on one side of the insulator 10 may be improved.

In FIG. 12 and FIG. 13, an example is illustrated in which the third plate 16 including portions having different thicknesses is provided in the first plate 11.

Optionally, the third plate 16 may have the portions having different thicknesses. The third plate 16 may include the first plate portion 16a and the second plate portion 16a. The first plate portion 16a may be a portion of the third plate 16 that is disposed farther from the corner of the insulator 10. The second plate portion 16a may be a portion of the third plate 16 that is disposed closer to the corner of the insulator 10. The second plate portion 16a may be formed as a separate part from the first plate portion 16a. It is preferable that the third plate 16 be formed thinly in a portion adjacent to the corner of the insulator 10 to minimize deterioration of the insulation performance. The first plate portion 16a may be formed thicker than the second plate portion 16a. For example, the first plate portion 16a may have the same thickness as the first plate 11. The second plate portion 16a may have a thickness that is thicker than the first plate 11 and thinner than the second plate 12. The second plate portion 16a may have a portion that overlaps the block 30. It is preferable that the second plate portion 16a be formed so as to extend the heat conduction path. The second plate portion 16a may not extend to the corner of the insulator 10. The second plate portion 16a may have a portion that is parallel to the first portion of the first plate 11.

Optionally, the third plate 16 may have a portion spaced apart from the block 30 disposed on one side of the insulator 10. The third plate 16 may have a portion spaced apart from the block 30 disposed on one side of the insulator 10.

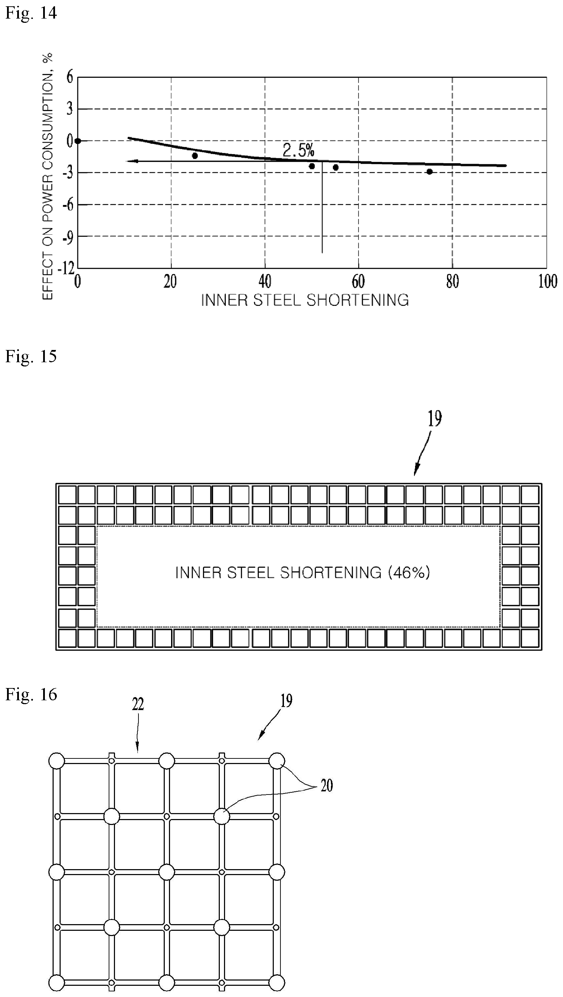

In FIG. 14, the effect of improving heat transfer is obtained by reducing or removing the third plate 16 or by having the structure with the grid-shaped ribs 16b, 16c, and 16d.

When the third plate 16 is shortened by approximately 50 mm, a heat transfer improvement effect of 2.5% can be confirmed. In comparison to when the third plate 16 is shortened by approximately 50 mm, when the third plate 16 is shortened by approximately 60 to 90 mm, it can be confirmed that the heat transfer improvement effect is not significantly exhibited. Therefore, it is preferable to shorten the third plate 16 by approximately 50 mm.

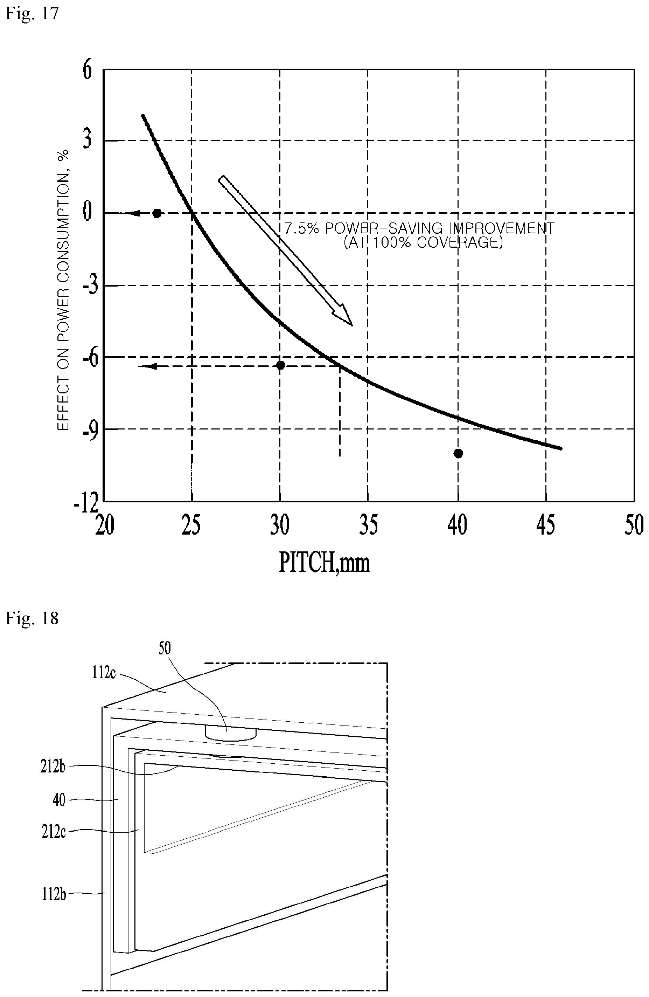

FIGS. 15 to 17 illustrate examples in which heat conduction can be minimized by expanding the pitch between the plurality of bars 20. The support plates 22a and 22b may be formed in a grid-shaped structure having a portion extending in a first direction and a portion extending in a second direction intersecting the first direction. The plurality of bars 20 may be disposed at the intersections of the portions extending in the first direction and the portions extending in the second direction of the support plates 22a and 22b. The plurality of bars 20 may be alternately disposed at the intersections of the portions extending in the first direction and the portions extending in the second direction. That is, the plurality of bars 20 may be disposed at 13 intersections out of a total of 25 intersections. As a result, the pitch of the bars 20 in the portion where the third plate 16 is disposed may be increased. Compared to a structure in which bars 20 are disposed at all intersections out of a total of 25 intersections, a structure in which bars 20 are disposed at 13 intersections out of a total of 25 intersections can improve the average pitch from 23 mm to 32 mm. Therefore, referring to the graph of FIG. 17, when the coverage is 100%, the power-saving effect of 7.5% can be confirmed. Due to the pitch expansion of the plurality of bars 20, thermal conductivity can be minimized without developing a separate mold. Since the pitch expansion area has a coverage of 46%, the power-saving effect of 3.5% can be confirmed.

The insulator 10 described above is not limited to the configuration and method of the embodiments described above, and the embodiments may be configured by selectively combining all or part of each embodiment so that various modifications can be made.

It will be apparent to those skilled in the art that the present disclosure may be embodied in other specific forms without departing from the spirit and essential characteristics thereof. Therefore, the above detailed description should not be construed in any way as limiting but rather as illustrative. The scope of the present disclosure should be determined by a reasonable interpretation of the appended claims, and all modifications within the scope of equivalents of the present disclosure are intended to be included within the scope of the present disclosure.

## Claims

1. An insulator comprising:
a first plate;
a second plate;
a vacuum space provided between the first plate and the second plate; and
a third plate disposed in the vacuum space and connected to at least a portion of the first and second plates.

2. The insulator of claim 1, further comprising a support plate supporting at least one of the first and second plates in the vacuum space,
wherein the third plate is disposed between at least one of the first and second plates and the support plate.

3. The insulator of claim 1, wherein the third plate is formed in a plate shape, a grid shape, or a shape including a plate-shaped portion and a grid-shaped portion.

4. The insulator of claim 3, wherein the third plate comprises a grid portion, and the grid portion includes a first grid extending in one direction and a second grid extending in a direction intersecting the one direction.

5. The insulator of claim 3, further comprising a block provided on one side of the insulator, and the plate-shaped portion does not overlap the block.

6. The insulator of claim 4, wherein the grid portion is provided on at least one side of the plate-shaped portion.

7. The insulator of claim 1, wherein a plurality of bars supporting the first and second plates are provided in the vacuum space, and the third plate extends to cover at least a portion of the outermost bar among the plurality of bars.

8. The insulator of claim 1, wherein the third plate has a grid-like shape or includes a portion with one side cut out.

9. The insulator of claim 1, wherein the second plate includes a portion forming one surface of a vacuum insulation portion and a portion bent on one side of the portion forming the one surface.

10. The insulator of claim 9, wherein the bent portion is further bent on one side.

11. The insulator of claim 1, wherein the third plate has a portion being in contact with one surface of the first plate forming the vacuum space.

12. The insulator of claim 1, further comprising a reinforcing member having a bendable portion and provided on one side of the second plate.

13. The insulator of claim 1, further comprising a block provided on one side of the insulator,
wherein the third plate includes a grid portion, and
the grid portion has a portion overlapping the block.

14. The insulator of claim 1, wherein the third plate includes:
a plate portion forming an inner portion or an outer portion defined between edges of the third plate ; and
a grid portion provided on at least one side of the plate portion, and
the grid portion include first and second grids extending in directions intersecting each other.

15. The insulator of claim 14, further comprising a plurality of bars installed in the vacuum space and supported between the first and second plates and disposed at a predetermined distance,
wherein the distance between at least one of the first and second grids is greater than the distance between the plurality of bars.
